# EUROPÄISCHE PATENTSCHRIFT

(11) **EP 3 539 136 B1**
(45) Veröffentlichungstag und Bekanntmachung des Hinweises auf die Patenterteilung: **05.08.2020**
(21) Anmeldenummer: 17821781.6
(22) Anmeldetag: 07.11.2017
(51) Int. Cl.: G21C 17/013, F22B 37/00, G21C 19/02, B23B 41/10

(54) **BOHRGERÄT FÜR DAS BEARBEITEN VON ROHREN IN RADIOAKTIVER UMGEBUNG**
DRILLING APPARATUS FOR WORKING ON TUBES IN A RADIOACTIVE ENVIRONMENT
APPAREIL DE PERÇAGE POUR L'USINAGE DE TUBES DANS UN ENVIRONNEMENT RADIOACTIF

(30) Priorität: 08.11.2016 DE 102016013245
(43) Veröffentlichungstag der Anmeldung: 18.09.2019
(73) Patentinhaber: Westinghouse Electric Germany GmbH, 68167 Mannheim (DE)
(72) Erfinder: ZIEGELMEYER, Fritz, 76669 Bad Schönborn (DE)
(74) Vertreter: Eickmeyer, Dietmar
(86) Internationale Anmeldenummer: PCT/EP2017/001292
(87) Internationale Veröffentlichungsnummer: WO 2018/086734

(56) Entgegenhaltungen:
- DE-A1-102010 039 413
- JP-A- H10 227 765
- US-A- 4 373 855
- US-A- 4 688 327
- US-A1- 2004 131 462
- US-B1- 6 282 461

## Beschreibung

Die Erfindung betrifft ein Bohrgerät für das Bearbeiten von Rohren an Rohrböden von Wärmetauschern in radioaktiver Umgebung.

In Kernkraftwerken werden in regelmäßigen Abständen Wartungsarbeiten und gegebenenfalls Reparaturen durchgeführt. Dabei gibt es Bereiche im Kernkraftwerk, die radioaktiver Strahlung ausgesetzt sind und nach einer gewissen Zeit selbst radioaktive Strahlung abgeben. Auch in dieser radioaktiven Umgebung sind die Wartungsarbeiten und Reparaturen durchzuführen, zum Beispiel an Dampferzeuger- oder Wärmetauscherrohren. Für Personen ist die radioaktive Umgebung ungeeignet und allenfalls kurzzeitig zugänglich. Zudem erfordern rechtliche Vorgaben, dass eine Strahlenbelastung von Personal und Material möglichst gering ist und eine bestimmte Obergrenze nicht überschreiten darf. Insofern ist auch der Einsatz von möglichst geringer Materialmenge wünschenswert. In diesen Bereichen kommen auch fernbedienbare Werkzeugmaschinen oder Prüfeinrichtungen zum Einsatz.

Für die Reparatur von Rohren, die in Rohrböden gehalten sind, gibt es die Möglichkeit eine Bohrmaschine zu verwenden, die an einem Roboterarm eines Roboters montiert ist, so dass die Bohrmaschine mit dem Roboterarm an die zu bearbeitende Stelle am Rohrboden in der radioaktiven Umgebung positioniert wird, wie es die US6282461B1 zeigt. Nachteilig bei diesem System ist es, dass die Bohrmaschine nur im Arbeitsbereich des Roboterarms eingesetzt werden kann. Sollen eine Vielzahl von Stellen an einem Rohrboden bearbeitet werden, muss zunächst der Roboter an eine andere Stelle verbracht werden, sodass die zu bearbeitende Stelle wieder durch den Roboterarm erreichbar ist. Das ist vergleichsweise aufwendig. Zudem ist die Masse des Roboters durch den Roboterarm entsprechend hoch. Alternativ kann der Roboterarm so groß konstruiert sein, dass der Arbeitsbereich der Ausdehnung des Rohrbodens entspricht. Dann ist die Masse des Reparaturroboters noch größer und das Auf- oder Abbauen des Roboters ist besonders aufwendig. Das Dokument DE 10 2010 039413 ist eine weitere Veröffentlichung die den Stand der Technik beschreibt.

Eine Möglichkeit sich über einen größeren Bereich des Rohrbodens eines Dampferzeugers oder Wärmetauschers in einem Kernkraftwerk zu bewegen bietet ein bekannt gewordener Inspektionsroboter "PEGASYS" der Firma Westinghouse, USA. Dieser bewegt eine Messsonde in einer Art Spaziergang an die gewünschte zu prüfende Stelle am Rohrboden indem Gruppen von Haltevorrichtungen abwechseln in den Rohren des Rohrbodens verankert sind oder sich lösen und dabei in neue Rohre einfahren und sich dort wiederum verankern. Der Inspektionsroboter hat kein mit dem Roboterarm vergleichbares Bauteil und ist entsprechend leichter. Nachteilig beim Inspektionsroboter ist jedoch, dass dessen Mechanik durch die beweglichen Teile eine vergleichsweise hohe Ungenauigkeit bei der Positionierung der Messsonde aufweist, die für eine Messung zwar ausreichend ist, jedoch für eine gattungsfremde Bearbeitung von Rohren mit einer Bohrmaschine ungeeignet ist, die zudem nicht manuell korrigiert werden kann. Irgendwelche Korrekturmöglichkeiten für die Positionierung des Inspektionsroboters sind nämlich weder in der Ebene des Rohrbodens noch senkrecht zu dieser Ebene vorgesehen.

Ausgehend von diesem Stand der Technik ist es Aufgabe der Erfindung, ein Bohrgerät anzugeben, welches möglichst einfach eine Vielzahl von Arbeitspositionen auf einem Rohrboden erreicht, eine möglichst geringe Masse aufweist und für eine Bearbeitung von Rohren eine ausreichende Genauigkeit aufweist.

Die Aufgabe wird gelöst durch ein Bohrgerät für das Bearbeiten von Rohren an Rohrböden von Wärmetauschern in radioaktiver Umgebung, mit einer Klemmelemente (18, 24) aufweisenden Transportvorrichtung. Das Bohrgerät ist **dadurch gekennzeichnet, dass** eine Klemmfinger aufweisende Bohrvorrichtung von der Transportvorrichtung gehalten ist, dass die Klemmelemente und die Klemmfinger auf einer gemeinsamen ersten Seite der Bohrvorrichtung und der Transportvorrichtung angeordnet sind, dass die Transportvorrichtung und die Bohrvorrichtung mit einer Tragvorrichtung verbunden sind, dass die Tragvorrichtung eine Tragplatte aufweist, auf der eine Aufliegeplatte der Bohrvorrichtung aufliegt, dass die Tragplatte mit wenigstens einem bewegbaren Verbindungselement mit der Aufliegeplatte verbunden ist, dass die Aufliegeplatte mit der Tragplatte in einer ersten Position des Verbindungselements spielfrei verbunden ist, dass die Aufliegeplatte in einer zweiten Position des Verbindungselemente ein vorgebbares Spiel bezogen auf die Tragplatte aufweist.

Die Erfindung weist also eine Transportvorrichtung mit Klemmelementen zur Fortbewegung auf. Mit der Transportvorrichtung ist es möglich, die Bohrvorrichtung prinzipiell zu jedem Rohr oder in jede Arbeitsposition auf einem Rohrboden zu verfahren, indem die Klemmelemente der Transportvorrichtung einzeln oder in Gruppen nach einem bestimmten vorgebbaren Verfahren sich in Rohren verklemmen oder lösen. Zudem wird durch die Transportvorrichtung auch eine Relativbewegung der Klemmelemente zueinander und derart eine Fortbewegung über den Rohrboden sichergestellt. Die Fortbewegung über einen Rohrboden ist an sich bereits bekannt, zum Beispiel vom Inspektionsroboter "PEGASYS". Die erfindungsgemäße Bohrvorrichtung ist während des Transportvorgangs mit der Transportvorrichtung starr verbunden, indem das Verbindungselement während des Transports in der ersten Position verbleibt. Das Verbindungselement wird nach dem Erreichen in die zweite Position verbracht, so dass die fest am Rohrboden verklemmte Transportvorrichtung mit einem Spiel zur Bohrvorrichtung, einem axialen und/oder radialen Spiel bezogen auf das Verbindungselement, verbunden ist. Mit diesem Spiel ist es der Bohrvorrichtung ermöglicht, die Klemmfinger in Rohre des Rohrbodens einzuführen und dort zu befestigen, insbesondere zu verklemmen. Dabei ist das Spiel so bemessen, dass die Verklemmung der Bohrvorrichtung in den Rohren am Rohrboden erfolgt, ohne dass hierdurch Kräfte auf die Transportvorrichtung übertragen werden. Mögliche Ungenauigkeiten bei der Positionierung der Bohrvorrichtung durch die Transportvorrichtung werden durch das Spiel ausgeglichen. Durch die beweglichen Teile der Transportvorrichtung können nämlich Ungenauigkeiten in der typischen Größenordnung bis zu 2,5 mm oder 3 mm entstehen. Die starre Rahmenkonstruktion der Bohrvorrichtung ist dafür eingerichtet, dass die Bearbeitungsposition eines Werkzeugs in der Bohrvorrichtung die erforderliche Genauigkeit aufweist, wenn die Klemmfinger ordnungsgemäß in den Rohren verklemmt sind.

Eine Weiterbildung des erfindungsgemäßen Bohrgeräts sieht vor, dass die Transportvorrichtung auf der ersten Seite wenigstens vier Halteelemente aufweist, die in zwei Gruppen aufgeteilt sind, dass jede Gruppe separat steuerbar ist, dass eine erste Gruppe von Halteelementen gegenüber einer zweiten Gruppe von Halteelementen verschwenkbar ist, und dass eine Gruppe von Haltelementen mit einer linearen Bewegung verschiebbar ist. Auf diese Weise sind zwei Bewegungen in Transportvorrichtung möglich. Zum einen ist ein Verschwenken der beiden Gruppen von Halteelementen gegeneinander ermöglicht. Damit ist die Transportvorrichtung in die Lage versetzt, die Richtung zu wechseln. Zum anderen ist einer Gruppe von Halteelementen eine lineare Bewegung ermöglicht. Auf diese Weise ist ein schrittweises versetzen der Transportvorrichtung entlang einer geraden Linie ermöglicht. Die beiden Bewegungsmöglichkeiten reichen aus, um es der Transportvorrichtung zu ermöglichen mit der Bohrvorrichtung auf besonders einfache Weise jede gewünschte Stelle am Rohrboden zu erreichen.

Eine vorteilhafte Ausgestaltung des Bohrgerät ist es, wenn die Bohrvorrichtung wenigstens zwei Haltefingern aufweist, und dass die Halteelemente und die wenigstens zwei Haltefingern in Richtung senkrecht zur ersten Seite bewegbar sind. Derart ist auf besonders günstige Weise erreicht, dass diejenigen Halteelemente oder Haltefinger je nach Anforderung in die Rohre hinein- oder hinausbewegbar sind. Sind die Halteelemente oder Haltefinger beispielsweise vollständig hinausbewegt, stehen keine Bauelemente auf der ersten Seite hervor, die sich im Rohrboden verhaken könnten.

Eine weitere Ausgestaltung des Bohrgeräts sieht vor, dass die Tragplatte oder die Aufliegeplatte wenigstens einen Begrenzungselement aufweist, der in einer Ausnehmung angeordnet ist, und dass durch die Gestalt der Ausnehmung ein Spiel in der zweiten Position des Verbindungselements ermöglicht ist. Mit einer derartigen konstruktiven Maßnahme wird vorteilhafterweise erreicht, dass das maximale Spiel zwischen Tragplatte und Aufliegeplatte begrenzt ist. Damit kann das Spiel auch auf besonders einfache Weise im Bedarfsfalle angepasst werden.

Eine weitere Fortbildung des Bohrgeräts ist dadurch gekennzeichnet, dass das Verbindungselement eine Antriebsvorrichtung, insbesondere eine pneumatische oder hydraulische Antriebsvorrichtung, aufweist, durch die das Verbindungselement wahlweise in die erste oder zweite Position verbringbar ist.

Eine Weiterbildung des Bohrgeräts ist erreicht, wenn ein zylinderförmiges Bauteil an der Tragplatte angeordnet ist, dass durch das zylinderförmige Bauteil eine Kraft auf die Aufliegeplatte ausübbar ist, dass die Aufliegeplatte um eine vorgebbare Strecke in Richtung der zweiten Position bewegbar ist. Auf diese Weise ist sichergestellt, dass Aufliegeplatte von der Tragplatte beabstandet ist und damit das Spiel zum Ausgleich der Position Ungenauigkeiten auch vorhanden ist. Es kann nämlich vorkommen, dass das Verbindungselement zwar die zweite Position gebracht wird, jedoch die Aufliegeplatte auf der tragplatte liegen bleibt. In einem derartigen Fall wäre auch kein Spiel vorhanden, da dann die Zentrierstifte kein Spiel zulassen.

Besonders vorteilhaft ist es, wenn die Kraft in einem Bereich einer gedachten Linie in die Aufliegeplatte eingebracht ist, die senkrecht zur ersten Seite steht und durch den Schwerpunkt der Bohrvorrichtung geht. Auf diese Weise ist sichergestellt, dass sich die Bohrvorrichtung gleichmäßig an den Rohrboden anlegt, d.h. dass sich zum Beispiel vorhandene Distanzelemente nahezu gleichzeitig an Rohrboden anlegen. Eine nicht gewünschte Schrägstellung der Bohrvorrichtung ist vermieden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein Ausführungsbeispiel eines Bohrgerätes in Draufsicht,
- Fig. 2: eine Ansicht auf ein Transportgerät mit Trägerelement des Bohrgerätes,
- Fig. 3: eine Ansicht auf einen Bereich um das Trägerelement sowie
- Fig. 4: eine Seitenansicht auf einen Teilbereich des Bohrgeräts an einem Rohrboden.

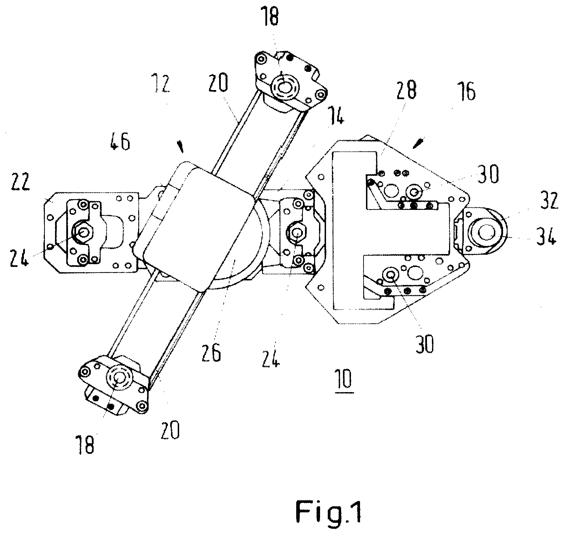

Fig. 1 zeigt eine Draufsicht auf ein Ausführungsbeispiel eines erfindungsgemäßen Bohrgeräts 10, bei dem ein Transportgerät 12 durch ein Trägerelement 14 mit einer Bohrvorrichtung 16 verbunden ist. Die Draufsicht zeigt dabei auf die Seite, die im Bearbeitungsfall einem Rohrboden zugewandt ist. Das Transportgerät 12 hat zwei erste Halteelemente 18, die durch Streben 20 verbunden und voneinander beanstandet sind. Ein Gehäuse 22 des Transportgeräts 12 weist zwei zweite Halteelemente 24 auf. Durch einen Strebenantrieb 46 sind die Streben 20 hin- und herbewegbar, so dass sich der Abstand zwischen den ersten Halteelementen 18 und dem Strebenantrieb 46 bedarfsweise ändert. Zudem lassen sich die ersten Halteelemente 18 durch einen Motor 26 um einen vorgebbaren Winkel relativ zu den zweiten Halteelemente 24 verdrehen beziehungsweise verschwenken. Die Verschwenkung kann auch umgekehrt erfolgen, nämlich dass sich die zweiten Halteelemente 24 durch den Motor 26 um einen vorgebbaren Winkel relativ zu den ersten Halteelementen 18 verschwenken. Eine Drehachse der Drehbewegung ist senkrecht zur Darstellung in dieser Draufsicht.

Die Bohrvorrichtung 16 weist eine Halteplatte 28 auf, die Ausnehmungen hat, durch die zwei Haltefinger 30 durchgreifen. Der Abstand der beiden Haltefinger 30 ist dabei so bemessen, dass diese zu den Abständen der Rohre im Rohrboden angepasst sind. Als Rohrboden sollen hier alle Rohrböden bezeichnet sein, die in Wärmetauschern oder Dampferzeugern Kernkraftwerken vorkommen. Typische Rohrdurchmesser für solche Rohrböden sind 12 mm bis 22 mm. In manchen Fällen kommen auch davon abweichende Rohrdurchmesser vor. Die Durchmesser des Teils der Haltefingern 30, der in den Rohren verklemmt wird, sind auf die unterschiedlichen Rohrdurchmesser angepasst. Auch der Abstand der Ausnehmungen der Halteplatte 28 ist auf die Abstände der Rohre im jeweiligen Rohrboden angepasst. Ein Werkzeughalter 32 überragt in dieser Figur seitlich die Halteplatte 28. Auch die Abstände zwischen einer Bearbeitungsachse 34 eines Werkzeugs im Werkzeughalter 32 und den Haltefingern 30 ist konstruktiv so vorgegeben, dass die Bearbeitung mit einem Werkzeug an einer vorgebbaren Stelle mit ausreichender Genauigkeit durchführbar ist.

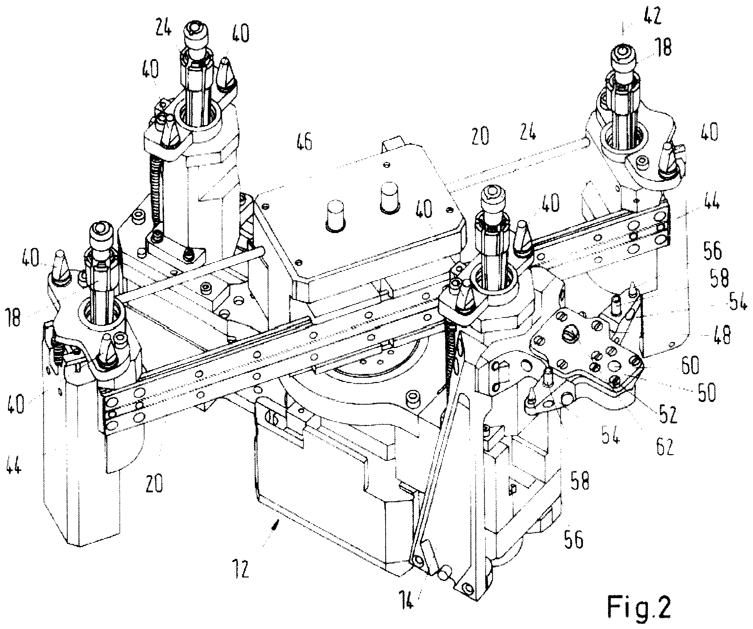

Fig. 2 zeigt eine Ansicht auf das Transportgerät 12 mit dem Trägerelement 14 des Bohrgerätes 10. Jedem Halteelement 18, 24 sind zwei Abstandsnoppen 40 zugeordnet, durch die das Transportgerät 12 einen vorgegebenen Abstand zum Rohrboden sicherstellt. Die ersten Halteelemente 18 sind nämlich über den zweiten Halteelementen 24 um eine Drehachse verschwenkbar und sind zudem entlang einer jeweiligen Symmetrieachse 42 hin- und herbewegbar. Die Fortbewegung des Transportgeräts 12 erfolgt dann wie folgt. In einer Ausgangsposition sollen die zweiten Halteelemente 24 in einem Rohrboden verklemmt sein. Dabei liegen beide zweiten Halteelemente 24 und die Abstandsnoppen 40 am Rohrboden an. Die ersten Halteelemente 18 sind dabei so weit in ein Halteelementegehäuse 44 eingefahren, dass bei einer Bewegung des Transportgerätes 12 der ersten Halteelemente 18 der Rohrboden nicht berührt wird. Auch die Haltefinger 30 weisen eine mit den Halteelementen 18, 24 vergleichbare Funktionalität auf und sind in der Transportphase des Bohrgerätes eingefahren. Die Bohrvorrichtung 16 ist in dieser Figur jedoch nicht dargestellt. Nun erfolgt eine Bewegung der ersten Halteelemente 18 entlang der Streben 20 mit einem Strebenantrieb 46 durch einen von einer Steuerung vorgegebenen Betrag. Die Steuerung optimiert dabei die Bewegung so, dass mit möglichst wenigen Transportschritten das Transportziel des Bohrgeräts 10 erreicht ist. Für eine Richtungsänderung sind die ersten Halteelemente 18 gegenüber den zweiten Halteelemente 24 verschwenkbar. Nachdem die ersten Halteelemente 18 ihre Position erreicht haben, werden diese aus dem Halteelementgehäuse 44 heraus und in ein Rohr am Rohrboden eingefahren und dort verklemmt. Sind die ersten Halteelemente 18 ordnungsgemäß in den Rohren verklemmt, ist das Transportgerät 12 und damit das Bohrgerät 10 mit den ersten Halteelemente 18 an seiner Position gesichert, sodass die zweiten Halteelemente 24 gelöst und in die Halteelementgehäuse 44 eingefahren werden. Im nun folgenden Verfahrensschritt bewegt sich der Strebenantrieb 46 mit ihm das Transportgerät 12 entlang der Streben 20 an eine neue Stelle des Rohrbodens. Dort werden die zweiten Halteelemente 24 wieder ausgefahren und in Rohren verklemmt. Die ersten Halteelemente 18 werden gelöst und wieder in die Halteelementgehäuse eingefahren. Anschließend bewegt der Strebenantrieb 46 die ersten Halteelemente 18 auf eine neue Position. Auf diese Weise ist die Ausgangssituation des Bewegungsverfahrens wiederhergestellt, das Bohrgerät 10 jedoch um einen bestimmten Abstand zur ursprünglichen Position versetzt. Dieses Vorgehen wird solange wiederholt, bis die gewünschte Zielposition des Bohrgeräts 12 erreicht ist. Durch ein Verschwenken oder Verdrehen des Transportgeräts 12 um die Drehachse ist die Bohrvorrichtung 16 an eine gewünschte Stelle positionierbar.

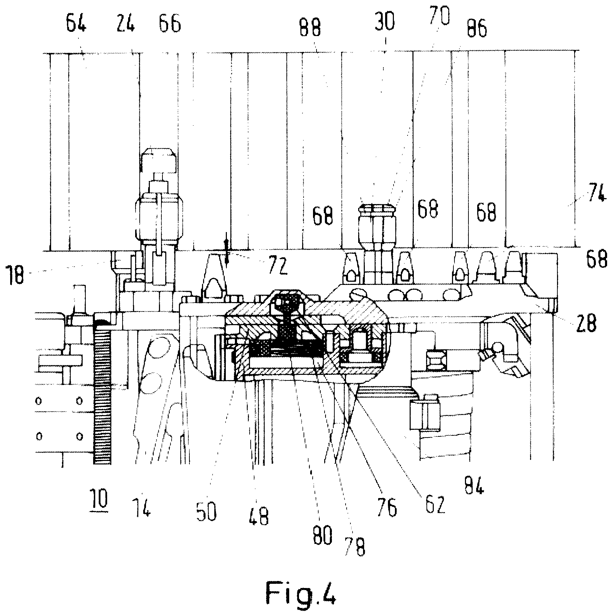

Die Fig. 2 zeigt das Trägerelement 14, das mit dem Transportgerät 12 verbunden ist. Das Trägerelement 14 weist einen Plattenträger 48 auf, auf dem eine Tragplatte 50 angeordnet und mit mehreren Schrauben 52 mit dem Plattenträger 48 verbunden ist. Die Tragplatte 50 ist auf der zum Rohrboden weisenden Seite des Bohrgeräts 10 und parallel zum Rohrboden angeordnet. Der Plattenträger 48 weist zudem zwei Seitenarme 54 auf, auf denen je ein Zentrierkegel 56 und je ein Begrenzungsstift 58 angeordnet sind. Zudem ist am Plattenträger 48 ein erster Antrieb angebracht, durch den ein Zylinderstift 60 im Bedarfsfalle durch eine Ausnehmung in der Tragplatte 48 in Richtung Rohrboden bewegbar ist. Zudem ist ein Verbindungselement 62 an der Tragplatte 50 gezeigt, dessen Funktion in Figur 4 näher erläutert wird.

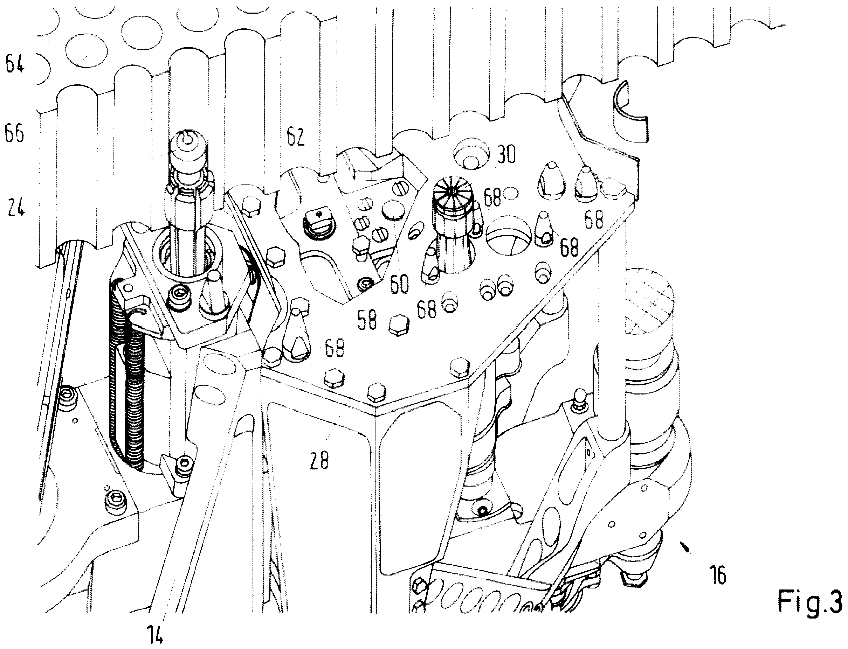

Figur 3 zeigt eine Ansicht auf einen Bereich um das Trägerelement 14 an einem Rohrboden 64 mit Rohren 66. Für eine verbesserte Erkennbarkeit verschiedener Bauteile wurden ein Bereich der Halteplatte 28 sowie ein Teil des Rohrbodens 64 freigeschnitten. Die Halteplatte 28 weist Distanzstücke 68 auf, die eine vergleichbare Funktion für die Bohrvorrichtung 16, wie die Abstandsnoppen 40 für das Transportgerät 12 haben. Zudem ist in dieser Figur einer der beiden Haltefinger 30 erkennbar, wobei dieser eine Fase 70 an seiner zum Rohrboden 64 weisenden Seite aufweist. Die Fase 70 ist so bemessen, dass das Einführen in ein Rohr 66 erleichtert ist, auch in dem Fall, das die Rohrmittelachse und die Mittelachse des Haltefingers 30 im Bereich der Ungenauigkeit bei der Positionierung durch das Transportgerät 12 zueinander versetzt sind. Auch bei Abweichungen von der Parallelität der Mittelachse innerhalb der Ungenauigkeit ist auf diese Weise das Einführen des Haltefingers 30 in ein Rohr 66 ermöglicht. Durch das Einführen des Haltefingers 30 wird die Lage von dessen Mittelachse bis zur Parallelität mit der Rohrmittelachse verändert.

Figur 4 zeigt eine Seitenansicht auf einen Bereich des Bohrgeräts 10 und den Rohrboden, wobei ein Teilbereich der Figur als Schnitt durch die Bohrvorrichtung 16 und den Rohrboden 64 gezeigt ist. Das Bohrgerät 10 wird gehalten durch die zweiten Halteelemente 24, die in Rohren 66 des Rohrbodens 64 verklemmt sind, während die ersten Halteelemente 18 nur teilweise in Rohren 66 angeordnet sind und demgemäß nicht verklemmt sind. Auf der Halteplatte 28 sind eine Anzahl Distanzstücke 68 angeordnet, die in dieser Figur einen ersten Abstand 72 von 2 mm zum Rohrboden 64 haben. Die Bohrvorrichtung 16 liegt demnach noch nicht am Rohrboden 64 an, das durch einen Endschalter 74 anzeigbar ist, der ebenfalls an der Halteplatte 28 angeordnet ist.

Das Verbindungselement 62 ist durch einen Pneumatikantrieb 76 bewegbar, der einen Pneumatikzylinder 78 aufweist, mit dem die Bewegungskraft auf das Verbindungselement 62 aufbringbar ist. Der Pneumatikzylinder 78 arbeitet dabei gegen eine Federkraft einer Feder 80, wobei die Figur den Pneumatikzylinder 78 in einer drucklosen zweiten Position zeigt, in der Feder das Verbindungselement 62 der Tragplatte 50 wegbewegt, sodass die Halteplatte 28 mit einem Spiel gegenüber der Tragplatte 50 bewegbar ist. Der in dieser Figur gezeigte zweite Abstand zwischen der Tragplatte 50 und der Halteplatte 28 beträgt jedoch 0 mm, so dass das mögliche Spiel noch nicht genutzt wurde.

Die Arbeitsweise des Bohrgeräts 10 soll im Folgenden näher erläutert werden. Dabei soll die Bohrvorrichtung 16 durch das Transportgerät 12 an eine Arbeitsposition verbracht worden sein. Die Distanzstücke 68 sind dann noch ca. 2 mm vom Rohrboden entfernt. Die Haltefinger 30 und der Zylinderstift 60 sind dabei eingefahren sowie der Pneumatikzylinder 78 ist mit Druckluft beaufschlagt. Wenn der Pneumatikzylinder 78 Druckluft beaufschlagt ist, befindet sich das Verbindungselement 62 in einer ersten Position, in der die Halteplatte 28 spielfrei auf der Tragplatte 50 gehalten ist. Die Zentrierkegel 56 sind in der ersten Position in den entsprechenden Zentrierausnehmungen in der Halteplatte 28 positioniert und stellen auf diese Weise sicher, dass sich die Halteplatte 28 in der konstruktiv vorgegebenen Lage relativ zur Tragplatte 50 befindet. Die erste Position ist auch geeignet für das manuelle Hantieren mit dem Bohrgerät 10 bzw. für die Montage der Montageeinheit aus Bohrvorrichtung 16 und Trägerelement 14 an das Transportgerät 12, da die Bauteile der Montageeinheit fest miteinander verbunden sind, als wäre es ein Bauteil. In einem nun folgenden Arbeitsschritt wird der Pneumatikzylinder 78 drucklos gemacht, so dass die Feder 80 das Verbindungselement 62 in die zweite Position verbringt. Dabei ist es der Bohrvorrichtung 16 ermöglicht, sich von der Tragplatte 50 zu lösen und sich nach einer Seite zuneigen. Dieses Neigen ist jedoch durch die Distanzstücke 68 begrenzt, indem sich - je nach Richtung der Neigung - eine oder mehrere der Distanzstücke 68 an den Rohrboden 64 anlegen. Einem nächsten Arbeitsschritt werden die Haltefinger 30 durch jeweils einen Haltefingerantrieb 84 in Rohre 66 eingefahren. Dabei sind die Spreizelemente 86 des Haltefingers 30 durch einen elastischen Ring 88 auf einen kleinstmöglichen Durchmesser des Haltefingers 30 gehalten, so dass ein größtes mögliches radiales Spiel zwischen den Haltefingern 30 den Rohren 66 besteht. Diese Situation ist in Figur 4 gezeigt. In einem weiteren Arbeitsschritt wird der Zylinderstift 60 mit einem entsprechenden Zylinderstiftantrieb ausgefahren, so dass die Halteplatte 28 angehoben wird und sich von der Tragplatte 50 löst. Dabei wird der Zylinderstiftantrieb günstigerweise so eingestellt, dass die Anhebungskraft nur geringfügig höher ist, als die Gewichtskraft der Bohrvorrichtung 16. Der Krafteinleitepunkt des Zylinderstifts 60 ist so gewählt, dass die Kraft in einem Bereich einer gedachten Linie eingebracht ist, die durch den Schwerpunkt der Bohrvorrichtung 16 geht und senkrecht auf der zum Rohrboden 64 weisenden Seite der Tragplatte 50 steht. Der Vorteil dieses Krafteinleitepunktes besteht darin, dass sich dann die Distanzstücke 68 in besonders vorteilhafterweise an den Rohrboden 64 anlegen. In einem nun folgenden Arbeitsschritt werden die Haltefinger 30 in den Rohren 66 gespannt, indem der Haltefingerantrieb 84 einen Konusdorn in Richtung der Spreizelemente 86 bewegt und diese entgegen der Kraftwirkung des elastischen Rings 88 gegen die Mantelflächen der Rohre 66 drückt. Auf diese Weise sind die Haltefinger 30 in den Rohren 66 verklemmt. Ein weiterer Vorteil dieses Vorgehens beim Verklemmen ist es, dass die Haltefinger 30 in den Rohren 66 und zu den Rohren 66 zentriert werden, da die Haltefinger 30 der Halteplatte 28 und damit mit der Bohrvorrichtung 16 verbunden sind, wird auch die Bohrvorrichtung 16 selbst ausgerichtet und zudem ist die Halteplatte 28 parallel zum Rohrboden 64 ausgerichtet. Die Ausrichtung ist dadurch ermöglicht, dass durch das Lösen der Halteplatte 28 von der Tragplatte 50 die Zentrierkegel 56 eine Relativbewegung der beiden Platten zueinander zu lassen, wobei die Relativbewegung durch die Begrenzungsstifte 58 und die Dimensionierung der Ausnehmungen, in den die Begrenzungsstifte aufgenommen sind, begrenzt sind. Durch die Konstruktion der Bohrvorrichtung 16 ist nun das Werkzeug, zum Beispiel ein Bohrer oder Fräser, an der Bohrvorrichtung 16 genau mittig zu dem zu bearbeitenden Rohr 66 positioniert. Einem weiteren Arbeitsschritt werden die Haltefinger 30 durch ihren Haltefingerantrieb 84 wieder in den Betriebsmodus Einfahren geschaltet. Die Distanzstücke 68 verhindern jedoch ein Einfahren und zudem sind die Haltefinger 30 in den Rohren 66 fest verklemmt. Daher wird mit der Zugkraft des Einfahrens die Bohrvorrichtung 16 an den Rohrboden 64 gezogen, in dem vorgestellten Ausführungsbeispiel des Erfindungsgegenstandes mit 10 kN. Durch diese Zugkraft ist sichergestellt, dass die bei der Bearbeitung eines Rohres 66 auftretenden Kräfte sicher durch die Bohrvorrichtung 16 aufgenommen werden. So liegt die Vorschubkraft für das Werkzeug im Ausführungsbeispiel bei 2 kN. Zudem ist die Bearbeitungsposition des Werkzeugs seitlich außerhalb der Halteplatte 28, so dass durch die Bearbeitung ein zusätzliches Moment in die Bohrvorrichtung eingebracht wird. Zudem treten bei der Bearbeitung Vibrationen und weitere Kräfte auf die von der Bohrvorrichtung 16 sicher aufgenommen und in den Rohrboden 64 geleitet werden. Der Pneumatikzylinder 78 ist dabei drucklos, so dass das Verbindungselement 62 sich in der zweiten Position befindet. Damit werden keine Kräfte, die bei der Bearbeitung auftreten auf das Transportgerät 12 übertragen. Nachdem die Bearbeitung beendet ist, werden die zuvor beschriebenen Arbeitsschritte zurückgenommen, so dass die Halteplatte 28 durch das Verbindungselement 62 wieder fest mit der Tragplatte 50 verbunden ist.

### Bezugszeichenliste

- 10: Bohrgerät
- 12: Transportgerät
- 14: Trägerelement
- 16: Bohrvorrichtung
- 18: erste Halteelemente
- 20: Streben
- 22: Gehäuse
- 24: zweite Halteelemente
- 26: Motor
- 28: Halteplatte
- 30: Haltefinger
- 32: Werkzeughalter
- 34: Bearbeitungsachse
- 40: Abstandsnoppen
- 42: Symmetrieachse
- 44: Halteelementgehäuse
- 46: Strebenantrieb
- 48: Plattenträger
- 50: Tragplatte
- 52: Schrauben
- 54: Seitenarme
- 56: Zentrierkegel
- 58: Begrenzungsstift
- 60: Zylinderstift
- 62: Verbindungselement
- 64: Rohrboden
- 66: Rohre
- 68: Distanzstücke
- 70: Fase
- 72: erster Abstand
- 74: Endschalter
- 76: Pneumatikantrieb
- 78: Pneumatikzylinder
- 80: Feder
- 84: Haltefingerantrieb
- 86: Spreizelemente
- 88: Ring

## Patentansprüche

1. Bohrgerät (10) für das Bearbeiten von Rohren (66) an Rohrböden (64) von Wärmetauschern in radioaktiver Umgebung, mit einer Klemmelemente (18, 24) aufweisenden Transportvorrichtung (12),
**dadurch gekennzeichnet, dass**
eine Klemmfinger (30) aufweisende Bohrvorrichtung (16) von der Transportvorrichtung (12) gehalten ist, dass die Klemmelemente (18, 24) und die Klemmfinger (30) auf einer gemeinsamen ersten Seite der Bohrvorrichtung (16) und der Transportvorrichtung (12) angeordnet sind, dass die Transportvorrichtung (12) und die Bohrvorrichtung (16) mit einer Tragvorrichtung (14) verbunden sind, dass die Tragvorrichtung (14) eine Tragplatte (50) aufweist, auf der eine Aufliegeplatte (28) der Bohrvorrichtung (16) aufliegt, dass die Tragplatte (50) mit wenigstens einem bewegbaren Verbindungselement (62) mit der Aufliegeplatte (28) verbunden ist, dass die Aufliegeplatte (28) mit der Tragplatte (50) in einer ersten Position des Verbindungselements (62) spielfrei verbunden ist, dass die Aufliegeplatte (28) in einer zweiten Position des Verbindungselements (62) ein vorgebbares Spiel bezogen auf die Tragplatte aufweist.

2. Bohrgerät (10) nach Anspruch 1, **dadurch gekennzeichnet, dass** die Transportvorrichtung (12) auf der ersten Seite wenigstens vier Halteelemente (18, 24) aufweist, die in zwei Gruppen aufgeteilt sind, dass jede Gruppe separat steuerbar ist, dass eine erste Gruppe von Halteelementen (18) gegenüber einer zweiten Gruppe von Halteelementen (24) verschwenkbar ist, und dass eine Gruppe von Haltelementen (18) mit einer linearen Bewegung verschiebbar ist.

3. Bohrgerät (12) nach Anspruch 1 oder 2, **dadurch gekennzeichnet, dass** die Bohrvorrichtung (16) wenigstens zwei Haltefingern (39) aufweist, und dass die Halteelemente (18, 24) und die wenigstens zwei Haltefingern (30) in Richtung senkrecht zur ersten Seite bewegbar sind.

4. Bohrgerät (12) nach einem der vorherigen Ansprüche, **dadurch gekennzeichnet, dass** die Tragplatte (50) oder die Aufliegeplatte (28) wenigstens ein Begrenzungselement (58) aufweist, der in einer Ausnehmung angeordnet ist, und dass durch die Gestalt der Ausnehmung ein Spiel in der zweiten Position des Verbindungselements (62) ermöglicht ist.

5. Bohrgerät (12) nach einem der vorherigen Ansprüche, **dadurch gekennzeichnet, dass** die Tragplatte oder die Aufliegeplatte (28) wenigstens ein in etwa kegel- oder kegelstumpfförmiges Zentrierelement (56) aufweist, und dass durch das wenigstens eine Zentrierelement (56) die Tragplatte (50) und die Aufliegeplatte (28) in einer vorgegebenen Lage zueinander angeordnet sind, sofern das Verbindungselement in der ersten Position positioniert ist.

6. Bohrgerät (12) nach einem der vorherigen Ansprüche, **dadurch gekennzeichnet, dass** das Verbindungselement (62) eine Antriebsvorrichtung (76), insbesondere eine pneumatische oder hydraulische Antriebsvorrichtung, aufweist, durch die das Verbindungselement (62) wahlweise in die erste oder zweite Position verbringbar ist.

7. Bohrgerät (12) nach Anspruch 6, **dadurch gekennzeichnet, dass** die Antriebsvorrichtung (76) eine Feder (80) aufweist, und dass durch die Feder (80) bei ausgeschalteter Antriebsvorrichtung (76) die Aufliegeplatte (28) mit der Tragplatte (50) in der zweiten Position gehalten ist.

8. Bohrgerät (12) nach Anspruch 6 oder 7, **dadurch gekennzeichnet, dass** durch die Antriebsvorrichtung (76) einen Antrieb aufweist, dass der Antrieb so gegen die Federkräfte der Feder (80) arbeitet dass das Verbindungselement (62) um eine vorgebbare Strecke senkrecht zur ersten Seite in die erste Position bewegbar ist.

9. Bohrgerät (12) nach einem der Ansprüche 6 bis 8, **dadurch gekennzeichnet, dass** ein zylinderförmiges Bauteil (60), insbesondere ein Stift oder Bolzen, an der Tragplatte (50) angeordnet ist, dass durch das zylinderförmige Bauteil (60) eine Kraft auf die Aufliegeplatte (28) ausübbar ist, dass die Aufliegeplatte (28) um eine vorgebbare Strecke in Richtung der zweiten Position bewegbar ist.

10. Bohrgerät (12) nach Anspruch 9, **dadurch gekennzeichnet, dass** die Kraft in einem Bereich einer gedachten Linie in die Aufliegeplatte (28) eingebracht ist, die senkrecht zur ersten Seite steht und durch den Schwerpunkt der Bohrvorrichtung (16) geht.

11. Bohrgerät (12) nach Anspruch 9 oder 10, **dadurch gekennzeichnet, dass** die Kraft nicht mehr als 10 Prozent höher ist als zum Ausgleich der Gewichtskraft der Bohrvorrichtung (16) notwendig ist.

12. Bohrgerät (12) nach einem der vorherigen Ansprüche, **dadurch gekennzeichnet, dass** durch eine Steuerungsvorrichtung die Funktionen der Transportvorrichtung (12) und / oder der Bohrvorrichtung (16) und / oder des Trägerelements (14) steuerbar sind.

## Claims

1. Drilling instrument (10) for machining tubes (66) in tube sheets (64) of heat exchangers in a radioactive environment, having a transport device (12) having clamping elements (18, 24),
**characterized in that**
a drilling device (16) having clamping fingers (30) is held by the transport device (12), **in that** the clamping elements (18, 24) and the clamping fingers (30) are arranged on a common first side of the drilling device (16) and of the transport device (12) **in that** the transport device (12) and the drilling device (16) are connected to a support device (14), **in that** the support device (14) has a support plate (50) on which a resting plate (28) of the drilling device (16) rests, **in that** the support plate (50) is connected to the resting plate (28) by way of at least one movable connecting element (62), **in that** the resting plate (28) is connected to the support plate (50) in a play-free manner in a first position of the connecting element (62), **in that** the resting plate (28) exhibits predefinabre play with regard to the support plate in a second position of the connecting element (62).

2. Drilling instrument (10) according to Claim 1, **characterized in that** the transport device (12) has, on the first side, at least four retaining elements (18, 24), which are subdivided into two groups, **in that** each group is controllable separately, **in that** a first group of retaining elements (18) is pivotable with respect to a second group of retaining elements (24), and **in that** one group of retaining elements (18) is displaceable with a linear movement.

3. Drilling instrument (10) according to Claim 1 or 2, **characterized in that** the drilling device (16) has at least two retaining fingers (39) and **in that** the retaining elements (18, 24) and the at least two retaining fingers (30) are movable in a direction perpendicular to the first side.

4. Drilling instrument (10) according to one of the preceding claims, **characterized in that** the support plate (50) or the resting plate (28) has at least one limiting element (58) which is arranged in a recess, and **in that** the shape of the recess allows play in the second position of the connecting element (62).

5. Drilling instrument (10) according to one of the preceding claims, **characterized in that** the support plate or the resting plate (28) has at least one approximately conical or frustoconical centring element (56), and **in that**, by way of the at least one centring element (56), the support plate (50) and the resting plate (28) are arranged in a predefined position with respect to one another when the connecting element is positioned in the first position.

6. Drilling instrument (10) according to one of the preceding claims, **characterized in that** the connecting element (62) has a drive device (76), in particular a pneumatic or hydraulic drive device, by way of which the connecting element (62) is movable selectively into the first or second position.

7. Drilling instrument (10) according to Claim 6, **characterized in that** the drive device (76) has a spring (80), and **in that**, by way of the spring (80), with the drive device (76) switched off, the resting plate (28) is held with the support plate (50) in the second position.

8. Drilling instrument (10) according to Claim 6 or 7, **characterized in that** the drive device (76) has a drive, **in that** the drive works counter to the spring forces of the spring (80) such that the connecting element (62) is movable into the first position by a predefinable distance perpendicularly to the first side.

9. Drilling instrument (10) according to one of Claims 6 to 8, **characterized in that** a cylindrical component (60), in particular a peg or pin, is arranged on the support plate (50), **in that** a force is able to be exerted on the resting plate (28) by the cylindrical component (60), **in that** the resting plate (28) is movable by a predefinable distance in the direction of the second position.

10. Drilling instrument (10) according to Claim 9, **characterized in that** the force is introduced into the resting plate (28) in a region of an imaginary line which is perpendicular to the first side and passes through the centre of gravity of the drilling device (16) .

11. Drilling instrument (10) according to Claim 9 or 10, **characterized in that** the force is no more than 10 per cent higher than is necessary to offset the weight force of the drilling device (16).

12. Drilling instrument (10) according to one of the preceding claims, **characterized in that** the functions of the transport device (12) and/or of the drilling device (16) and/or of the carrier element (14) are controllable by a control device.

## Revendications

1. Appareil de perçage (10) pour l'usinage de tubes (66) au niveau de fonds de tube (64) d'échangeurs de chaleur dans un environnement radioactif, comprenant un dispositif de transport (12) qui possède des éléments de serrage (18, 24),
**caractérisé en ce que**
un dispositif de perçage (16) possédant un doigt de serrage (30) est maintenu par le dispositif de transport (12), **en ce que** les éléments de serrage (18, 24) et le doigt de serrage (30) sont disposés sur un premier côté commun du dispositif de perçage (16) et du dispositif de transport (12), **en ce que** le dispositif de transport (12) et le dispositif de perçage (16) sont reliés à un dispositif porteur (14), **en ce que** le dispositif porteur (14) possède une plaque porteuse (50) sur laquelle repose une plaque d'appui (28) du dispositif de perçage (16), **en ce que** la plaque porteuse (50) est reliée à la plaque d'appui (28) par au moins un élément de liaison (62) mobile, **en ce que** la plaque d'appui (28) est reliée à la plaque porteuse (50) sans jeu dans une première position de l'élément de liaison (62), **en ce que** dans une deuxième position de l'élément de liaison (62), la plaque d'appui (28) présente un jeu pouvant être prédéfini par rapport à la plaque porteuse (50).

2. Appareil de perçage (10) selon la revendication 1, **caractérisé en ce que** le dispositif de transport (12) possède au moins quatre éléments de maintien (18, 24) sur le premier côté, lesquels sont divisés en deux groupes, **en ce que** chaque groupe peut être commandé séparément, **en ce qu'**un premier groupe d'éléments de maintien (18) peut pivoter par rapport à un deuxième groupe d'éléments de maintien (24), et **en ce qu'**un groupe d'éléments de maintien (18) peut coulisser avec un mouvement linéaire.

3. Appareil de perçage (10) selon la revendication 1 ou 2, **caractérisé en ce que** le dispositif de perçage (16) possède au moins deux doigts de maintien (39), et **en ce que** les éléments de maintien (18, 24) et les au moins deux doigts de maintien (30) peuvent être déplacés dans une direction perpendiculaire à un premier côté.

4. Appareil de perçage (10) selon l'une des revendications précédentes, **caractérisé en ce que** la plaque porteuse (50) ou la plaque d'appui (28) possède au moins un élément de délimitation (58) qui est disposé dans une cavité, et **en ce qu'**un jeu est rendu possible dans la deuxième position de l'élément de liaison (62) par la configuration de la cavité.

5. Appareil de perçage (10) selon l'une des revendications précédentes, **caractérisé en ce que** la plaque porteuse ou la plaque d'appui (28) possède au moins un élément de centrage (56) approximativement conique ou tronconique, et **en ce que** la plaque porteuse (50) et la plaque d'appui (28) sont disposées dans une position prédéfinie l'une par rapport à l'autre par l'élément de centrage (56), sous réserve que l'élément de liaison soit positionné dans la première position.

6. Appareil de perçage (10) selon l'une des revendications précédentes, **caractérisé en ce que** l'élément de liaison (62) possède un dispositif d'entraînement (76), notamment un dispositif d'entraînement pneumatique ou hydraulique, par le biais duquel l'élément de liaison (62) peut être amené, au choix, dans la première ou la deuxième position.

7. Appareil de perçage (10) selon la revendication 6, **caractérisé en ce que** le dispositif d'entraînement (76) possède un ressort (80), et **en ce que** lorsque le dispositif d'entraînement (76) est mis hors circuit, la plaque d'appui (28) est maintenue par le ressort (80) dans la deuxième position avec la plaque porteuse (50).

8. Appareil de perçage (10) selon la revendication 6 ou 7, **caractérisé en ce que** le dispositif d'entraînement (76) possède un mécanisme d'entraînement, **en ce que** le mécanisme d'entraînement agit contre la force de ressort du ressort (80) de telle sorte que l'élément de liaison (62) peut être déplacé d'un trajet pouvant être prédéfini perpendiculairement au premier côté dans la première position.

9. Appareil de perçage (10) selon l'une des revendications 6 à 8, **caractérisé en ce qu'**un élément structural de forme cylindrique (60), notamment une broche ou un goujon, est disposé au niveau de la plaque porteuse (50), **en ce qu'**une force peut être exercée sur la plaque d'appui (28) par l'élément structural de forme cylindrique (60), **en ce que** la plaque d'appui (28) peut être déplacée d'un trajet pouvant être prédéfini en direction de la deuxième position.

10. Appareil de perçage (10) selon la revendication 9, **caractérisé en ce que** la force est chargée dans la plaque d'appui (28) dans une zone d'une ligne imaginaire qui est perpendiculaire au premier côté et qui passe par le centre de gravité du dispositif de perçage (16).

11. Appareil de perçage (10) selon la revendication 9 ou 10, **caractérisé en ce que** la force n'est pas supérieure de plus de 10 pour cent à ce qui est nécessaire pour compenser le poids du dispositif de perçage (16).

12. Appareil de perçage (10) selon l'une des revendications précédentes, **caractérisé en ce que** les fonctions du dispositif de transport (12) et/ou du dispositif de perçage (16) et/ou de l'élément porteur (14) peuvent être commandées par un dispositif de commande.
